# EUROPEAN PATENT APPLICATION

(11) **EP 2 629 190 A1**
(43) Date of publication of application: **21.08.2013**
(21) Application number: 13155981.7
(22) Date of filing: 20.02.2013
(51) Int. Cl.: G06F 3/0488, G06F 3/0489, G06F 3/02

(54) **Supporting touch input and key input in an electronic device**

(30) Priority: 20.02.2012 KR 20120016944
(71) Applicant: Samsung Electronics Co., Ltd., Gyeonggi-do 443-742 (KR)
(72) Inventor: Jang, In-ra, Gyeonggi-do (KR)
(74) Representative: Brandon, Paul Laurence

(57) **Abstract**

A method of controlling an electronic apparatus, including: determining whether an apparatus manipulating input is a touch input or a key input; if the apparatus manipulating input is the touch input, providing a touch user interface (TUI); and if the apparatus manipulating input is the key input, providing a key input user interface (PUI).

## Description

### BACKGROUND

### 1. Field

The invention relates to an electronic apparatuses, methods of controlling the same, and computer-readable storage media.

### 2. Description of the Related Art

Electronic apparatuses generally include a user interface (UI) for interaction with a user. Recently, the need for a UI capable of maximizing user convenience has increased. In particular, the convenience of an electronic apparatus is often determined by the convenience of a UI, and thus, the UI is an important factor to determine the competitiveness of electronic apparatuses.

### SUMMARY

The invention provides an electronic apparatus that may maximize user convenience by providing different types of UIs according to a user's input type, a method of controlling the electronic apparatus, and a computer-readable storage medium.

According to an aspect of the invention, there is provided a method of controlling an electronic apparatus, the method including: determining whether an apparatus manipulating input is a touch input or a key input; if the apparatus manipulating input is the touch input, providing a touch user interface (TUI); and if the apparatus manipulating input is the key input, providing a push-button or key input user interface (PUI).

The TUI and the PUI are different from each other in terms of at least one of the number of objects to be displayed on one screen of a UI, sizes of the objects, intervals between the objects, and arrangement of the objects.

The TUI and the PUI may include objects having level structures, wherein the TUI provides objects of one level to one screen and the PUI provides objects of a plurality of levels to one screen.

The method may further include providing the PUI while providing a screen converting effect whereby if the key input is input while the TUI is provided, the TUI is converted into the PUI; and providing the TUI while providing a screen converting effect whereby if the touch input is input while the PUI is provided, the PUI is converted into the TUI.

The method may further include determining a type of an external input apparatus connected to the electronic apparatus; providing the TUI when the external input apparatus is a touch input; and providing the PUI when the external input apparatus is a key input.

The method may further include determining a type of an external output apparatus connected to the electronic apparatus; providing the TUI when the electronic apparatus manipulates the external output apparatus by using a touch input; and providing the PUI when the electronic apparatus manipulates the external output apparatus by using a key input.

The electronic apparatus may be a digital photographing apparatus, and the TUI and the PUI may include at least one a first level object for representing a type of a photographing setting value and at least one second level object for representing values that may be selected from the photographing setting values, wherein the TUI may include a first screen for displaying the at least one first level object and a second screen for displaying the at least one second level object corresponding to the first level object selected from the first screen, wherein the PUI may include a third screen for displaying the at least one first level object together with the at least one second level object.

According to another aspect of the invention, there is provided an electronic apparatus including: an input type determination unit to determine whether an apparatus manipulating input is a touch input or a key input; and a UI providing unit to provide a TUI if the apparatus manipulating input is the touch input, and provide a PUI if the apparatus manipulating input is the key input.

The TUI and the PUI are different from each other in terms of at least one of the number of objects to be displayed on one screen of a UI, sizes of the objects, intervals between the objects, and arrangement of the objects.

The TUI and the PUI may include objects having level structures, wherein the TUI provides objects of one level to one screen and the PUI provides objects of a plurality of levels to one screen.

The UI providing unit may provide the PUI while providing a screen converting effect in which if the key input is input while the TUI is provided, the TUI may be converted into the PUI, and may provide the TUI while providing a screen converting effect whereby if the touch input is input while the PUI is provided, the PUI may be converted into the TUI.

The input type determination unit may determine a type of an external input apparatus connected to the electronic apparatus, and the UI providing unit may provide the TUI when the external input apparatus is a touch input and may provide the PUI when the external input apparatus is a key input.

The input type determination unit may determine a type of an external output apparatus connected to the electronic apparatus, and the UI providing unit may provide the TUI when the electronic apparatus manipulates the external output apparatus by using a touch input and provides the PUI when the electronic apparatus may manipulate the external output apparatus by using a key input.

The electronic apparatus may be a digital photographing apparatus, and the TUI and the PUI may include at least one a first level object for representing a type of a photographing setting value and at least one second level object for representing values that may be selected from the photographing setting values, wherein the TUI may include a first screen for displaying the at least one first level object and a second screen for displaying the at least one second level object corresponding to the first level object selected from the first screen, wherein the PUI may include a third screen for displaying the at least one first level object together with the at least one second level object.

The electronic apparatus may further include a touch input unit to receive a touch input unit; and a key input unit to receive a key input.

At least one of the touch input unit and the key input unit may be attachable to and detachable from the electronic apparatus.

The electronic apparatus may further include a display unit to display a screen of the TUI or the PUI; a touch input unit that is included in the display unit and is to receive the touch input; and a key input unit that is included in the display unit and is to receive the key input.

According to another aspect of the invention, there is provided a computer-readable storage medium having embodied thereon a program for executing a method of controlling an electronic apparatus when the electronic apparatus is executed by a processor, wherein the method includes: determining whether an apparatus manipulating input is a touch input or a key input; if the apparatus manipulating input is the touch input, providing a TUI; and if the apparatus manipulating input is the key input, providing a PUI.

### BRIEF DESCRIPTION OF THE DRAWINGS

The above and other features and advantages of the invention will become more apparent upon review of detail exemplary embodiments thereof with reference to the attached drawings in which:
FIG. 1 is a view showing an exterior of an electronic apparatus according to an embodiment of the invention;
FIG. 2 is a block diagram of a structure of the electronic apparatus of FIG. 1;
FIG. 3 is a view showing configurations of a TUI and a PUI according to an embodiment of the invention;
FIG. 4 is a view showing two example screens of the TUI of FIG. 3;
FIG. 5 is a view showing a TUI and a PUI according to another embodiment of the invention;
FIG. 6 is a view showing a TUI and a PUI according to another embodiment of the invention;
FIG. 7 is a view showing a TUI and a PUI according to another embodiment of the invention;
FIG. 8 is a flowchart showing a method of controlling an electronic apparatus according to an embodiment of the invention;
FIG. 9 is a view showing an electronic apparatus and external input apparatuses connected to the electronic apparatus, according to another embodiment of the invention;
FIG. 10 is a flowchart showing a method of controlling an electronic apparatus according to another embodiment of the invention;
FIG. 11 is a view showing an electronic apparatus and external output apparatuses connected to the electronic apparatus, according to another embodiment of the invention; and
FIG. 12 is a flowchart showing a method of controlling an electronic apparatus according to another embodiment of the invention.

### DETAILED DESCRIPTION

Hereinafter, exemplary embodiments of the invention will be described in greater detail with reference to the accompanying drawings. These embodiments are provided so that this disclosure will be thorough and complete and will fully convey the concept of the invention to those of ordinary skill in the art.

The present disclosure and drawings are not intended to restrict the scope of the invention and only used for a better understanding of (i.e., to facilitate the understanding of) the invention. The specific terms used in this disclosure should be interpreted as having a meaning that is consistent with their meaning in the context of the relevant art and should not be interpreted in an idealized or overly formal sense unless expressly so defined herein. Expressions such as "at least one of," when preceding a list of elements, modify the entire list of elements and do not modify the individual elements of the list.

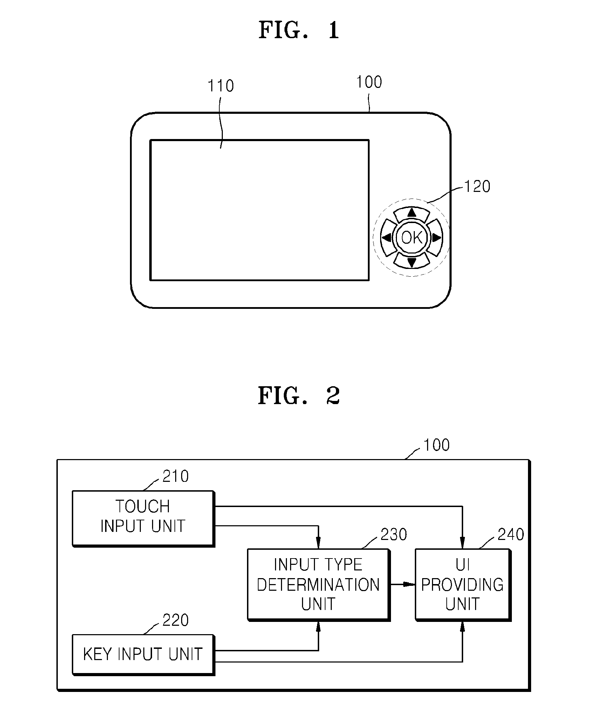

FIG. 1 is a view showing an exterior of an electronic apparatus 100 according to an embodiment of the invention.

The electronic apparatus 100 includes a display unit 110 and a key pad 120. The display unit 110 may be configured as a touch screen.

When the electronic apparatus 100 is controlled through a touch input via, for example, a touch screen, a user may instinctively control the electronic apparatus 100. On the other hand, the accuracy of controlling the electronic apparatus 100 through the touch input may be lower than the accuracy of controlling the electronic apparatus 100 using a key input, because a wrong touch input may occur, for example, a touch input may occur at a point other than a desired touch point when a user uses a finger, a touch pen, or the like to touch the touch screen.

When the electronic apparatus 100 is controlled by using a key input through the key pad 120, or the like, a control signal may be accurately input, although immediacy is lower compared to the case when the touch input is used. Also, when the electronic apparatus 100 is controlled by using a key input, controllability of the electronic apparatus 100 may be slightly lower.

In the embodiment shown in FIG. 1, the electronic apparatus 100 may receive an apparatus control input through a touch input unit (that is, the display unit 110 is configured as a touch screen) and a key input unit (that is, the key pad 120), and when a touch input is received, a touch user interface (hereinafter, referred to as a 'TUI') is provided, and when a key input is received, a push-button or key input user interface (hereinafter, referred to as a 'PUI') is provided.

The electronic apparatus 100 shown in FIG. 1 includes both the touch input unit and the key input unit, but the invention is not limited thereto. According to another embodiment of the invention, the electronic apparatus 100 may include only the touch input unit and may receive a key input via an external input apparatus. The external input apparatus capable of inputting the key input may be, for example, a keyboard, a joystick, a mouse, or the like. According to another embodiment of the invention, the electronic apparatus 100 may include only the key input unit and may receive a touch input via an external input apparatus. The external input apparatus capable of inputting the touch input may be, for example, a touch pad, a touch screen, a tablet, or the like.

According to another embodiment of the invention, at least one of the touch input unit and the key input unit may be formed to be attachable to and detachable from the electronic apparatus 100.

According to another embodiment of the invention, both the key input unit and the touch input unit may be configured as a touch type unit. Also, the key input unit may be located outside of the display unit 110, and the touch input unit may be located on the display unit 110. In this case, the touch input unit may be configured in such a way that a user may directly touch the TUI screen. Also, in the key input unit according to the current embodiment, at least one touch sensing area may be disposed outside of the display unit 110 so that each touch sensing area may be used as one key.

The electronic apparatus 100 may be any of various types of electronic apparatuses that may receive a touch input and a key input to provide a UI. For example, the electronic apparatus 100 may be a digital photographing apparatus, a mobile phone, a smart phone, a laptop, a personal digital assistant (PDA), or the like.

FIG. 2 is a block diagram of a structure of the electronic apparatus 100 of FIG. 1.

The electronic apparatus 100 of the current embodiment may include a touch input unit 210, a key input unit 220, an input type determination unit 230, and a UI providing unit 240.

The touch input unit 210 is an input system that may receive a touch input from a user, and may be, for example, a touch screen, a touch pad, a touch sensor, or the like. The touch input unit 210 may detect a touch input and provide information, for example, a coordinate, strength, a length of a touch operation, etc. to the UI providing unit 240. Also, when the touch input unit 210 receives a touch input, the touch input unit 210 may transmit information indicating that the touch input unit 210 has received the touch input to the input type determination unit 230.

The key input unit 220 is an input system that may receive a key input from a user, and may be, for example, a button, a key pad, a jog dial, a wheel, or the like. The key input unit 220 may detect a key input and provide information, for example, a type, a length of the key input, and the like to the UI providing unit 240. Also, when the key input unit 220 receives a key input, the key input unit 220 may transmit information indicating that the key input unit 220 has received the key input to the input type determination unit 230.

When the input type determination unit 230 receives an apparatus manipulating input, the input type determination unit 230 determines whether the apparatus manipulating input is a touch input or a key input and provides a determination result to the UI providing unit 240.

The UI providing unit 240 provides a TUI or a PUI according to the result of the determination of the input type determination unit 230.

When a touch input is input, the UI providing unit 240 provides a TUI. For this, the UI providing unit 240 controls the electronic apparatus 100 so as to display a screen of the TUI on the display unit 110. The UI providing unit 240 controls the TUI according to a touch input by using information, for example, the coordinate, the strength, the length of the touch operation, etc. that are input by the touch input unit 210.

The TUI is an UI configured to facilitate a touch input, and the PUI is an UI configured to facilitate a key input. The touch input may allow a user to conveniently and immediately select a desired object, but the accuracy of the touch input is lower compared to the key input and requires an object having a relatively large area. Meanwhile, the key input has a lower immediacy and a higher accuracy than the touch input. As such, in the embodiments of the invention, in consideration of different characteristics between the touch input and the key input, if a touch input is input, a TUI that is configured to be proper for the touch input is automatically provided, and if a key input is input, a PUI that is configured to be proper for the key input is automatically provided. The TUI and the PUI different in at least one aspect of the UI interface that is provided.

Accordingly, according to the current embodiment of the invention, if a touch input is detected while the PUI is provided by the UI providing unit 240, the PUI is automatically converted into a TUI, and if a key input is detected while the TUI is provided by the UI providing unit 240, the TUI is automatically converted into a PUI. According to such a configuration, the electronic apparatus 100 may increase user convenience by actively changing a type of the UI in response to a user's input.

Also, according to the current embodiment of the invention, the UI providing unit 240 may allow a user to recognize a change in UI by applying an animation effect when converting the TUI into the PUI or converting the PUI into the TUI. For example, when a UI is converted, the UI providing unit 240 may provide an animation effect that shows a trajectory of converting the current UI into the next UI so that a user may perceive a continuous image when the current UI is converted into the next UI.

Also, the UI providing unit 240 may generate a screen on which a result of processed data, a program code, or the like is reflected on a UI when a controller (not shown) for controlling operations of the electronic apparatus 100 processes functions of the electronic apparatus 100, and may control components of the electronic apparatus 100 so as to provide the screen to a user through the display unit 110. For example, the UI providing unit 240 may generate a UI screen and provide the UI screen to a component such as a display driving unit (not shown) for driving the display unit 110 of the electronic apparatus 100, and thus, may provide the UI screen to a user.

In addition, the UI providing unit 240 may send an apparatus manipulating input that is input by the touch input unit 210 or the key input unit 220 to a UI to generate a UI screen, and may provide the apparatus manipulating input to the controller to allow components of the electronic apparatus 100 to be operated according to the apparatus manipulating input.

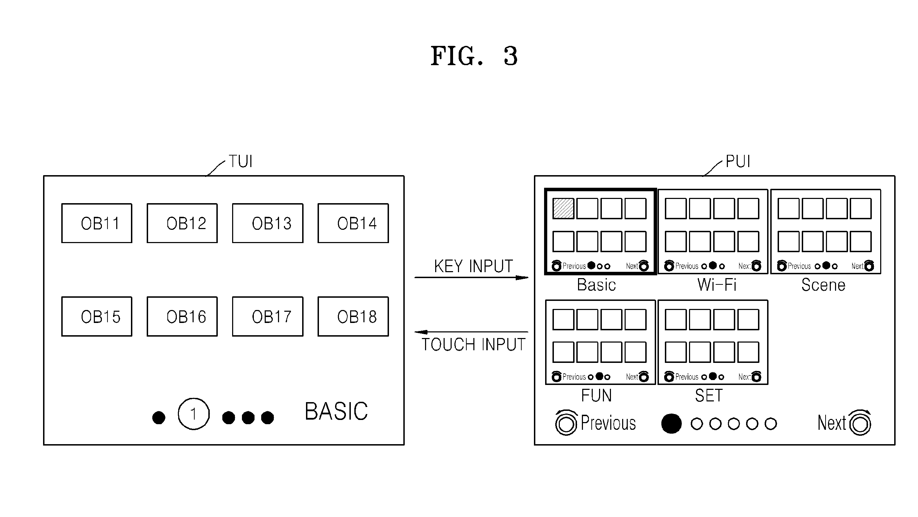

Next, embodiments of a TUI and a PUI will be described with reference to FIGS. 3 to 7.

FIG. 3 is a view showing configurations of the TUI and the PUI according to an embodiment of the invention.

When the UI has a plurality of levels, the TUI may display objects corresponding to one level on one screen, and the PUI may display objects corresponding to a plurality of levels on one screen. The objects may be icons, menus, buttons, or the like that are displayed on the screen.

FIG. 3 shows UIs including objects of a first level, such as BASIC, Wi-Fi, SCENE, FUN, and SET, and objects of a second level corresponding to BASIC, such as OB11, OB12, OB13, OB14, OB15, OB16, OB17, and OB18. The objects of the first level, that is, Wi-Fi, SCENE, FUN, and SET, may include at least one object of the second level corresponding to each of the Wi-Fi, SCENE, FUN, and SET.

According to the current embodiment of the invention, as shown in FIG. 3, the TUI may display objects corresponding to one level on one screen, and the PUI may display objects corresponding to a plurality of levels on one screen. Referring to FIG. 3, the TUI provides OB11, OB12, OB13, OB14, OB15, OB16, OB17, and OB18 that are objects of the second level corresponding to the object BASIC of the first level. Meanwhile, the PUI provides BASIC, Wi-Fi, SCENE, FUN, and SET that are objects of the first level, and the objects of the second level corresponding to the respective objects of the first level are displayed on one screen.

As such, according to the current embodiment, the TUI provides objects corresponding to one level on one screen, thereby reducing the number of objects provided on one screen and increasing sizes of the objects. Accordingly, one object occupies a relatively wide area in the TUI, and thus a user may easily use a UI by using a touch input. Also, the touch input may cause a malfunction in that a user's undesirable adjacent object is selected by using a finger, a touch pen, or the like. According to the TUI of the invention, the number of objects provided on one screen in the TUI may be reduced and the sizes of the objects may be increased, thereby remarkably decreasing the possibility of a malfunction occurrence when using the touch input.

Also, in the current embodiment of the invention, the PUI provides objects corresponding to a plurality of levels on one screen, thereby increasing the number of objects provided on one screen. Accordingly, the PUI provides objects of a wider range of level on one screen and provides a greater number of objects, and thus a user may easily ascertain a level structure of the objects, and the number of objects that are available on one screen. Since the key input may be more accurately manipulated as compared with the touch input and has a lower possibility of leading to a malfunction occurrence, objects of a plurality of levels may be provided on one screen, and a greater number of objects may be provided, and thus, the PUI may be configured so as to provide more pieces of information on one screen. Also, by providing a greater number of objects on one screen, a user may see and select a desired object or information without converting the screen.

According to another embodiment of the invention, objects corresponding to a plurality of levels are provided to both the TUI and the PUI, and the TUI may provide a lesser number of levels than the PUI.

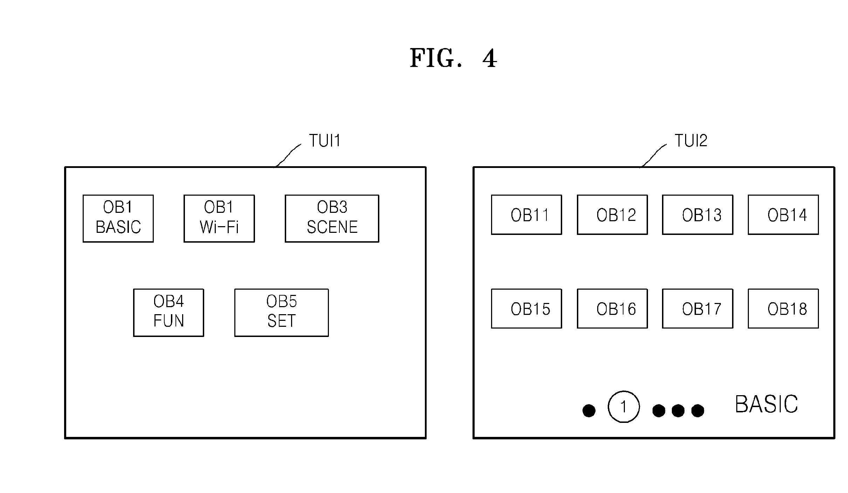

FIG. 4 is a view showing two example screens of the TUI of FIG. 3.

As described above with reference to FIG. 3, according to the current embodiment of the invention, the TUI provides objects of only one level to one screen. For this, the TUI may be configured in such a way that the first level and the second level are provided on different screens. For example, a first screen TUI1 of the TUI provides objects of the first level, that is, OB1, OB2, OB3, OB4, and OB5. When objects of any one first level are selected on the first screen TUI1, objects of the second level corresponding to the objects of the selected first level are provided on a second screen TUI2. For example, as shown in FIG. 4, when the object BASIC OB1 is selected in TUI1, objects of the second level corresponding to the object BASIC OB1, that is, OB11, OB12, OB13, OB14, OB15, OB16, OB17, and OB18, are provided on the second screen TUI2.

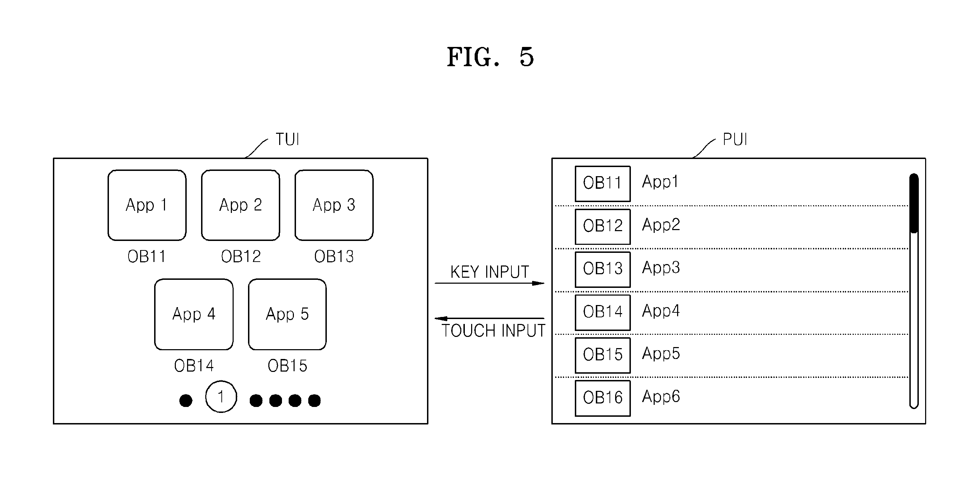

FIG. 5 is a view showing a TUI and a PUI according to another embodiment of the invention.

According to the current embodiment, the TUI may provide objects in the form of icons arranged in a two-dimensional array, and the PUI may provide objects in the form of a list. In the current embodiment, in the TUI, sizes of areas required for the objects are increased and intervals between the objects are increased to facilitate a touch input. Meanwhile, in the PUI, objects are arranged in order to facilitate selection through a key manipulation.

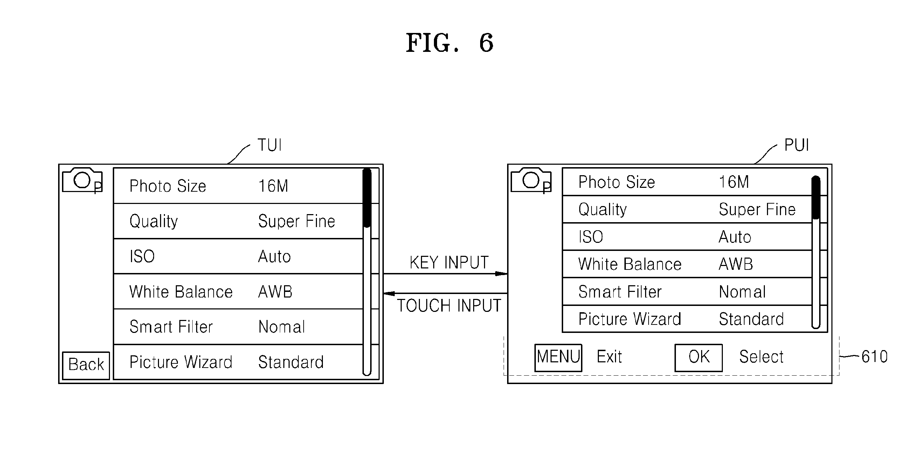

FIG. 6 is a view showing a TUI and a PUI according to another embodiment of the invention.

According to the current embodiment, objects are arranged in the form of a list in the TUI and the PUI so that one row of the TUI may be disposed to be higher than one row of the PUI. Also, sizes of areas for the objects are maximized in the TUI, while an explanation area 610 for providing explanation about each key may be provided to a UI screen in the PUI.

Accordingly, a size of an area for one object is increased and intervals between the objects are increased in the TUI, while more pieces of information may be provided to one screen in the PUI.

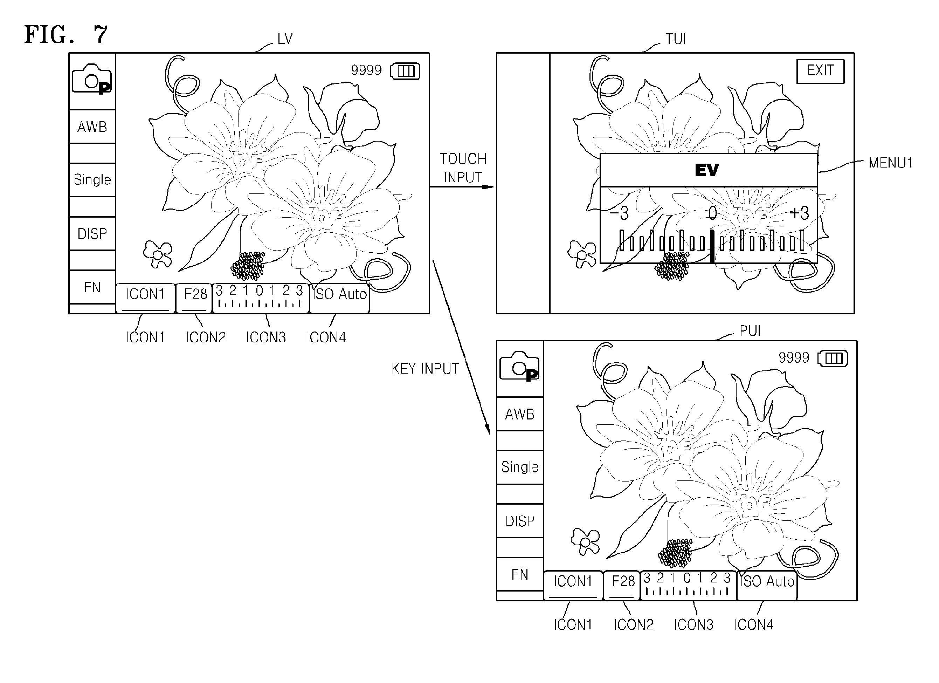

FIG. 7 is a view showing a TUI and a PUI according to another embodiment of the invention.

According to the current embodiment, the electronic apparatus 100 is a digital photographing apparatus, and the TUI and the PUI are UIs for setting a photographing setting value of the digital photographing apparatus. According to the current embodiment, objects corresponding to a plurality of photographing setting values, that is, ICON1, ICON2, ICON3, and ICON4, are provided on a live view screen LV shown in FIG. 7.

According to the current embodiment, if a touch input for selecting any one object is input on the live view screen LV, the TUI is provided. The TUI enlarges and provides a menu MENU1 for adjusting a photographing setting value corresponding to the object that is selected on the live view screen LV by a user. In this case, the objects ICON1, ICON2, and ICON4 corresponding to photographing setting values other than the photographing setting value that is selected by the user may disappear from the live view screen LV or may be displayed as it is. Also, the TUI according to the current embodiment may provide an icon EXIT together with the menu MENU1 for adjusting the photographing setting value, wherein the icon EXIT indicates that a screen, which enlarges and provides the menu MENU1, returns to a previous screen.

If a key input for selecting any one object is selected on the live view screen LV, the PUI is provided. The PUI emphasizes and displays an object ICON3 corresponding to a photographing setting value corresponding to the object selected on the live view screen LV by the user, and adjusts the photographing setting value corresponding to the object selected by the user according to the key input. At this time, the objects ICON1, ICON2, and ICON4 corresponding to photographing setting values other than the photographing setting value selected by the user may be displayed together with the object ICON3 corresponding to a photographing setting value that is subsequently selected. Also, the PUI according to the current embodiment may display current setting values of the photographing setting values other than the photographing setting value selected by the user.

According to the configurations of the TUI and the PUI, a user may easily adjust the selected photographing setting value by using a wide area in the TUI and may control a setting value of the selected photographing setting value while ascertaining setting values of a plurality of photographing setting values on one screen in the PUI, thereby maximizing user convenience.

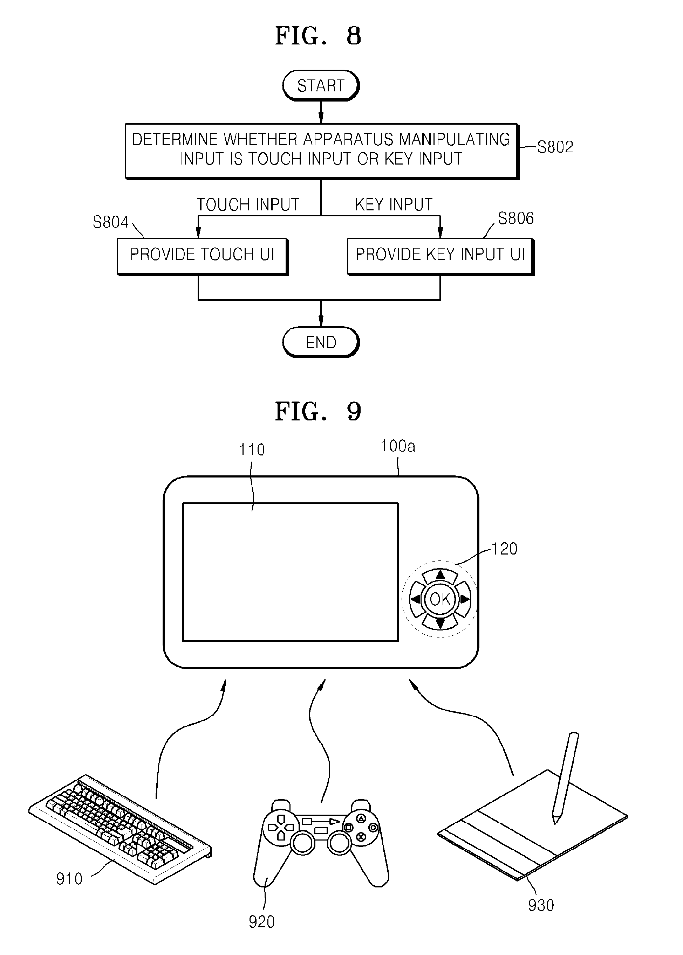

FIG. 8 is a flowchart showing a method of controlling an electronic apparatus according to an embodiment of the invention.

In the method of controlling the electronic apparatus of the current embodiment, when an apparatus manipulating input is detected, it is determined whether the apparatus manipulating input is a touch input or a key input (operation S802). If the apparatus manipulating input is the touch input, a TUI is provided (operation S804). If the apparatus manipulating input is the key input, a PUI is provided (operation S806). The TUI and the PUI may be modified in various ways as described above with reference to FIGS. 3 to 7.

FIG. 9 is a view showing an electronic apparatus 100a and external input apparatuses connected to the electronic apparatus 100a, according to another embodiment of the invention.

According to the current embodiment, the electronic apparatus 100a may be controlled via an apparatus manipulating input through an input system included in the electronic apparatus 100a and may also be controlled via an apparatus manipulating input through an external input apparatus. The external input apparatus may be, for example, a keyboard 910, a joystick 920, a tablet 930, or the like. In addition, various external input apparatuses, such as a track ball, a mouse, a touch pad, or the like, may be connected to the electronic apparatus 100a. The external input apparatus may input a key input or a touch input according to a type of input. For example, a key input may be input to the electronic apparatus 100a by using a keyboard 910, a joystick 920, a mouse, a track ball, or the like, and a touch input may be input to the electronic apparatus 100a by using a tablet 930, a touch pad, or the like.

The electronic apparatus 100a may be connected to the external input apparatuses 910, 920, and 930 in a wired or wireless manner by using various types of cables. For example, the external input apparatus may be connected to the electronic apparatus 100a by using a wired cable, such as a universal serial bus (USB), or through wireless communication such as Wi-Fi, Bluetooth, or the like.

In the current embodiment, when an apparatus manipulating input is input from the external input apparatus, the input type determination unit 230 (see FIG. 2) determines whether the apparatus manipulating input is a touch input or a key input. The UI providing unit 240 provides a TUI or a PUI according to a type of the apparatus manipulating input that is input from the external input apparatus.

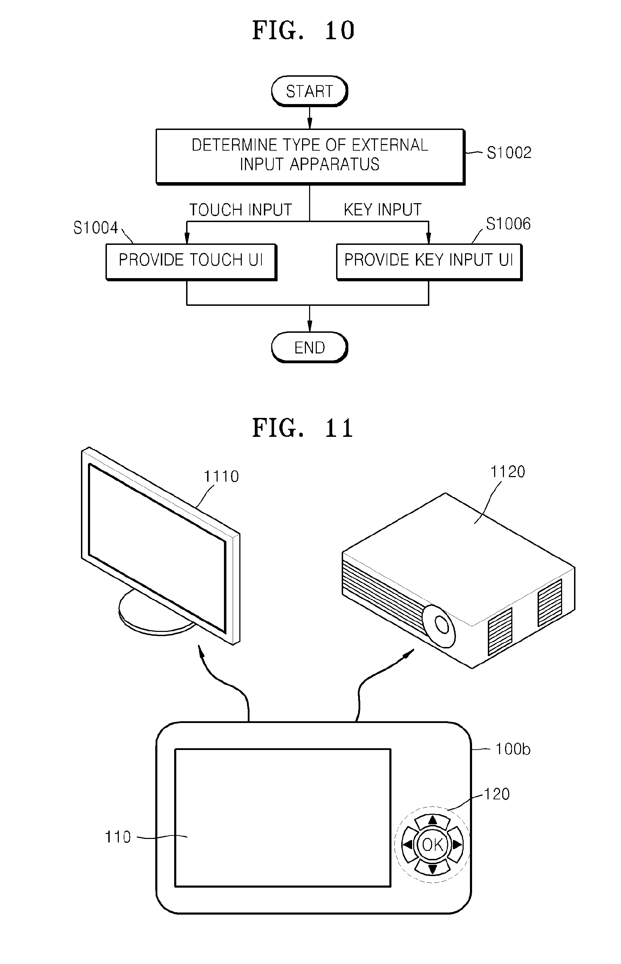

FIG. 10 is a flowchart showing a method of controlling an electronic apparatus according to another embodiment of the invention.

According to the current embodiment, when an apparatus manipulating input is input to the electronic apparatus 100a by using an external input apparatus, it is determined whether the apparatus manipulating input is a touch input or a key input (operation S1002). If the apparatus manipulating input is the touch input, a TUI is provided (operation S1004). If the apparatus manipulating input is the key input, a PUI is provided (operation S1006).

FIG. 11 is a view showing an electronic apparatus 100b and external output apparatuses connected to the electronic apparatus 100b, according to another embodiment of the invention.

According to the current embodiment, when the electronic apparatus 100b provides a screen generated by the electronic apparatus 100b to at least one external output apparatus, the electronic apparatus 100b may be used as an input apparatus for inputting an apparatus manipulating input. In this case, the electronic apparatus 100b may be used as an apparatus for providing a touch input or a key input according to a type of the external output apparatus.

The external output apparatus may be, for example, a television 1110, a projector 1120, or the like.

If the external output apparatus is connected, the input type determination unit 230 (see FIG. 2) determines whether the apparatus manipulating input to be output to the external output apparatus is a touch input or a key input. If the apparatus manipulating input to be output to the external output apparatus is the touch input, the UI providing unit 240 provides a TUI to the electronic apparatus 100b. If the apparatus manipulating input to be output to the external output apparatus is the key input, the UI providing unit 240 provides a PUI to the electronic apparatus 100b.

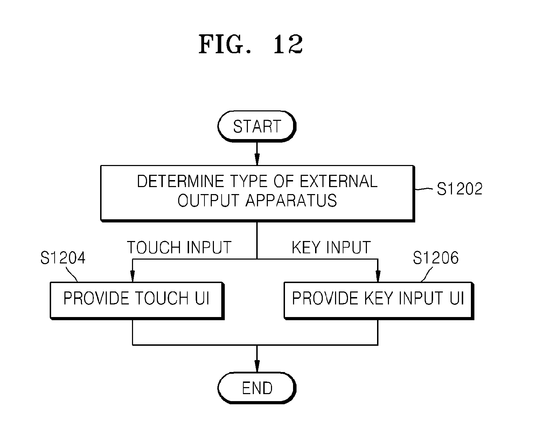

FIG. 12 is a flowchart showing a method of controlling an electronic apparatus according to another embodiment of the invention.

In the method of controlling the electronic apparatus, it is determined whether an apparatus manipulating input to be output to an external output apparatus is a touch input or a key input (operation S1202). If the apparatus manipulating input to be output to the external output apparatus is the touch input, a TUI is provided to the electronic apparatus 100b. If the apparatus manipulating input to be output to the external output apparatus is the key input, a PUI is provided to the electronic apparatus 100b.

According to the embodiments of the invention, user convenience may be maximized by differently providing a UI according to a type of a user's input.

The invention can be embodied as computer readable code stored in a computer readable medium. Also, the invention can be embodied as a computer-readable storage medium that stores at least one of a resultant image file or a resultant image reproducing file. Here, the computer readable medium may be any recording apparatus capable of storing data that is read by a computer system.

The computer readable code is constructed to perform the operations included in a digital image processing method according to the invention when this code is read from the computer readable recording medium via a processor (for example, a CPU/DSP). The computer readable code may be embodied using various programming languages. A functional program, code and code segments may be easily programmed by those of ordinary skill in the technical field to which the invention pertains.

Examples of the computer readable medium may include a read-only memory (ROM), a random access memory (RAM), a compact disc (CD)-ROM, a magnetic tape, a floppy disk, an optical data storage device, and so on. The computer readable medium can be distributed among computer systems that are interconnected through a network, and the invention may be stored and implemented as computer readable code in the distributed system.

While the invention has been particularly shown and described with reference to exemplary embodiments thereof, it will be understood by those of ordinary skill in the art that various changes in form and details may be made therein without departing from the spirit and scope of the invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling an electronic apparatus, the method comprising:
determining whether an apparatus manipulating input is a touch input or a key input;
if the apparatus manipulating input is the touch input, providing a touch user interface (TUI); and
if the apparatus manipulating input is the key input, providing a key input user interface (PUI).

2. The method of claim 1, wherein the TUI and the PUI are different from each other in terms of at least one of the number of objects to be displayed on one screen of a user interface (UI), sizes of the objects, intervals between the objects, and arrangement of the objects.

3. The method of claim 1, wherein the TUI and the PUI comprise objects having level structures, wherein the TUI provides objects of one level to one screen and the PUI provides objects of a plurality of levels to one screen.

4. The method of claim 1, further comprising:
providing the PUI while providing a screen converting effect whereby if the key input is input while the TUI is provided, the TUI is converted into the PUI; and
providing the TUI while providing a screen converting effect whereby if the touch input is input while the PUI is provided, the PUI is converted into the TUI.

5. The method of claim 1, further comprising:
determining a type of an external input apparatus connected to the electronic apparatus;
providing the TUI when the external input apparatus is a touch input; and
providing the PUI when the external input apparatus is a key input.

6. The method of claim 1, further comprising:
determining a type of an external output apparatus connected to the electronic apparatus;
providing the TUI when the electronic apparatus manipulates the external output apparatus by using a touch input; and
providing the PUI when the electronic apparatus manipulates the external output apparatus by using a key input.

7. The method of claim 1, wherein the electronic apparatus is a digital photographing apparatus, and the TUI and the PUI comprise at least one a first level object for representing a type of a photographing setting value and at least one second level object for representing values that may be selected from the photographing setting values,
wherein the TUI comprises a first screen for displaying the at least one first level object and a second screen for displaying the at least one second level object corresponding to the first level object selected from the first screen,
wherein the PUI comprises a third screen for displaying the at least one first level object together with the at least one second level object.

8. An electronic apparatus (100, 100a, 100b) comprising:
an input type determination unit (230) configured to determine whether an apparatus manipulating input is a touch input or a key input; and
a user interface (UI) providing unit (240 configured) to provide a touch user interface (TUI) if the apparatus manipulating input is the touch input, and provide a key input user interface (PUI) if the apparatus manipulating input is the key input.

9. The electronic apparatus (100, 100a, 100b) of claim 8, wherein the TUI and the PUI are different from each other in terms of at least one of the number of objects to be displayed on one screen of a user interface (UI), sizes of the objects, intervals between the objects, and arrangement of the objects.

10. The electronic apparatus (100, 100a, 100b) of claim 8, wherein the TUI and the PUI comprise objects having level structures, wherein the TUI provides objects of one level to one screen and the PUI provides objects of a plurality of levels to one screen.

11. The electronic apparatus (100, 100a, 100b) of claim 8, wherein the UI providing unit (240) is configured to provide the PUI while providing a screen converting effect in which if the key input is input while the TUI is provided, the TUI is converted into the PUI, and to provide the TUI while providing a screen converting effect whereby if the touch input is input while the PUI is provided, the PUI is converted into the TUI.

12. The electronic apparatus (100, 100a, 100b) of claim 8, wherein the input type determination unit (230) is configured to determine a type of an external input apparatus connected to the electronic apparatus, and the UI providing unit (240) is configured to provide the TUI when the external input apparatus is a touch input and provide the PUI when the external input apparatus is a key input.

13. The electronic apparatus (100, 100a, 100b) of claim 8, wherein the input type determination unit (230) is configured to determine a type of an external output apparatus connected to the electronic apparatus, and the UI providing unit is to provide the TUI when the electronic apparatus manipulates the external output apparatus by using a touch input and provide the PUI when the electronic apparatus manipulates the external output apparatus by using a key input.

14. The electronic apparatus (100, 100a, 100b) of claim 8, wherein the electronic apparatus is a digital photographing apparatus, and the TUI and the PUI comprise at least one a first level object for representing a type of a photographing setting value and at least one second level object for representing values that may be selected from the photographing setting values,
wherein the TUI comprises a first screen for displaying the at least one first level object and a second screen for displaying the at least one second level object corresponding to the first level object selected from the first screen,
wherein the PUI comprises a third screen for displaying the at least one first level object together with the at least one second level object.

15. A computer-readable storage medium having embodied thereon a program for executing a method of controlling an electronic apparatus when the electronic apparatus is executed by a processor, wherein the method comprises:
determining whether an apparatus manipulating input is a touch input or a key input;
if the apparatus manipulating input is the touch input, providing a touch user interface (TUI); and
if the apparatus manipulating input is the key input, providing a key input user interface (PUI).
